# EUROPEAN PATENT APPLICATION

(11) **EP 4 632 926 A1**
(43) Date of publication of application: **15.10.2025**
(21) Application number: 24886213.8
(22) Date of filing: 29.10.2024
(51) Int. Cl.: H01M 50/392, H01M 50/141, H01M 50/35, H01M 50/178, H01M 50/183

(54) **POUCH-TYPE SECONDARY BATTERY**

(30) Priority: 01.11.2023 KR 20230149520; 09.08.2024 KR 20240107187; 09.08.2024 KR 20240107188
(71) Applicant: LG Energy Solution, Ltd., Seoul 07335 (KR)
(72) Inventor: KIM, Mi Na, Daejeon 34122 (KR); PARK, Eun Suk, Daejeon 34122 (KR); JU, Hye Yeong, Daejeon 34122 (KR); YU, Hyung Kyun, Daejeon 34122 (KR); LEE, Yu Jin, Daejeon 34122 (KR)
(74) Representative: Goddar, Heinz J.
(86) International application number: PCT/KR2024/016682
(87) International publication number: WO 2025/095540

(57) **Abstract**

The present invention provides a pouch type secondary battery including an electrode assembly, an outer casing including an accommodation portion for accommodating the electrode assembly, and a terrace portion formed along a perimeter of the accommodation portion and having a sealing portion with a portion of a width thereof sealed, an electrode lead electrically connected to the electrode assembly and protruding outward from the outer casing, a lead film disposed between the electrode lead and the outer casing, a gas guide portion disposed between the electrode lead and the lead film and including a permeable portion provided on an outer side of the sealing portion and at least one gas channel extending from the permeable portion toward the electrode assembly via the sealing portion, and a reinforcing film disposed on the lead film to cover at least a portion of the permeable portion. In addition, the reinforcing film includes an insertion portion occupying a portion of the width of the sealing portion, and the insertion portion is a region in which one end of the reinforcing film extends in an inward direction from the outer casing and is inserted between the outer casing of the sealing portion and the lead film.

## Description

### TECHNICAL FIELD

The present invention relates to a pouch type secondary battery, and more particularly, to a pouch type secondary battery including a gas guide portion for discharging gas inside the battery.

### BACKGROUND ART

Secondary batteries are used in various categories including small-sized products such as digital cameras, P-DVDs, MP3Ps, mobile phones, PDAs, portable game devices, power tools, and E-bikes as well as large-sized products requiring high power such as electric vehicles and hybrid vehicles, power storage devices for storing surplus power or renewable energy, and backup power storage devices. The secondary batteries include nickel-cadmium batteries, nickel-hydrogen batteries, lithium ion batteries, and lithium ion polymer batteries.

The secondary batteries may be manufactured by accommodating an electrode assembly, in which a positive electrode, a negative electrode, and a separator sandwiched therebetween are alternately stacked, in a battery case, injecting an electrolyte, and then sealing the battery case. The secondary batteries are classified into pouch type secondary batteries and can type secondary batteries according to a material of a case accommodating an electrode assembly. In particular, the pouch type batteries may be manufactured by performing press processing on a flexible pouch film laminate to form a cup portion, and then accommodating an electrode assembly in a receiving space inside the cup portion and sealing a sealing portion.

The pouch type secondary batteries may generate gas inside a pouch when operated at high temperatures, overcharged, or brought with a short circuit. When the gas pressure inside the pouch increases, the pouch may get vented to explode or ignite.

To overcome the limitations described above, research has been undertaken into different types of gas emission components, and there is a growing need for a gas discharge component designed to manage gas discharge, external moisture intrusion, and electrolyte leakage, a gas discharge component with high internal pressure resistance but low operating pressure, and moreover, a gas discharge component exhibiting high durability.

### DISCLOSURE OF THE INVENTION

### TECHNICAL PROBLEM

The present invention is designed to overcome the limitations described above, and thus, an aspect of the present invention provides, in a secondary battery provided with gas guide portion, a pouch type secondary battery that includes a reinforcing film applied to a gas guide portion to prevent deformation, thereby maintaining an appropriate gas discharge rate and addressing moisture intrusion and electrolyte leakage caused by the stretching of a film portion through which gas permeates as the gas is discharged, and a battery pack including the same.

Another aspect of the present invention provides, in the secondary battery described above, a pouch type secondary battery provided with a gas guide portion, which includes a reinforcing film applied to the gas guide portion to prevent deformation, where the reinforcing film is disposed to be inserted into a sealing portion, thereby preventing deformation of the film and improving the sealing strength of a portion where the gas guide portion and the reinforcing film are added, resulting in significantly enhanced durability, and a battery pack including the same.

### TECHNICAL SOLUTION

[1] According to an aspect of the present invention, provided is a pouch type secondary battery including an electrode assembly, an outer casing including an accommodation portion for accommodating the electrode assembly, and a terrace portion formed along a perimeter of the accommodation portion and having a sealing portion with a portion of a width thereof sealed, an electrode lead electrically connected to the electrode assembly and protruding outward from the outer casing, a lead film disposed between the electrode lead and the outer casing, a gas guide portion disposed between the electrode lead and the lead film and including a permeable portion provided on an outer side of the sealing portion and at least one gas channel extending from the permeable portion toward the electrode assembly via the sealing portion, and a reinforcing film disposed on the lead film to cover at least a portion of the permeable portion, wherein the reinforcing film includes an insertion portion occupying a portion of the width of the sealing portion, and the insertion portion is a region in which one end of the reinforcing film extends in an inward direction of the outer casing and is inserted between the outer casing of the sealing portion and the lead film.
[2] The present invention provides the pouch type secondary battery according to [1] above, wherein the secondary battery may be configured such that an interface between the lead film and the gas guide film opens along the gas channel, induced by an increase in internal pressure of the outer casing, thereby providing a gas discharge path.
[3] The present invention provides the pouch type secondary battery according to [1] or [2] above, wherein the reinforcing film may be disposed on the lead film to cover an entire portion of the permeable portion.
[4] The present invention provides the pouch type secondary battery according to any one of [1] to [3] above, wherein the reinforcing film may have a tensile strength of 6.0 MPa to 9.0 MPa at 60 °C.
[5] The present invention provides the pouch type secondary battery according to any one of [1] to [4] above, wherein a ratio of a length of the insertion portion to the width of the sealing portion may range from 0.05 to 0.90.
[6] The present invention provides the pouch type secondary battery according to any one of [1] to [5] above, wherein the reinforcing film may have a thickness of 60 µm to 150 µm.
[7] The present invention provides the pouch type secondary battery according to any one of [1] to [6] above, wherein the reinforcing film may include an adhesive layer in contact with the lead film and an insulating layer with a portion of a surface thereof exposed to the outside.
[8] The present invention provides the pouch type secondary battery according to any one of [1] to [7] above, wherein the reinforcing film may include an adhesive layer in contact with the lead film and an insulating layer with a portion of a surface thereof exposed to the outside, and the adhesive layer may include a modified polyolefin resin, and the insulating layer may include an unmodified polyolefin resin.
[9] The present invention provides the pouch type secondary battery according to any one of [1] to [8] above, wherein the reinforcing film may include an adhesive layer in contact with the lead film, an insulating layer with a portion of a surface thereof exposed to the outside, and an intermediate layer disposed between the adhesive layer and the insulating layer.
[10] The present invention provides the pouch type secondary battery according to any one of [1] to [9] above, wherein the reinforcing film may include an adhesive layer in contact with the lead film, an intermediate layer disposed on the adhesive layer, and an insulating layer disposed on the intermediate layer and having a portion of a surface thereof exposed to the outside, and the adhesive layer may have a lower melting point (Tm) than the intermediate layer.
[11] The present invention provides the pouch type secondary battery according to at least one of [1] to [10] above, wherein the reinforcing film may include an adhesive layer in contact with the lead film, an intermediate layer disposed on the adhesive layer, and an insulating layer disposed on the intermediate layer and having at least a portion of a surface thereof exposed to the outside, and the adhesion layer may include a modified polyolefin resin, and the intermediate layer and the insulating layer each independently may include an unmodified polyolefin resin.
[12] The present invention provides the pouch type secondary battery according to at least one of [1] to [11] above, wherein the gas guide portion may include an adhesive resin layer in contact with the electrode lead and a permeable resin layer in contact with the lead film.
[13] The present invention provides the pouch type secondary battery according to [12] above, wherein in the adhesive resin layer, one end protruding in an outward direction from the outer casing may protrude further than one end of the permeable resin layer protruding in an outward direction from the outer casing.
[14] The present invention provides the pouch type secondary battery according to [12] and/or [13] above, wherein in the lead film, one end protruding in an outward direction from the outer casing may protrude further than one end of the permeable resin layer protruding in an outward direction from the outer casing.
[15] According to another aspect of the present invention, there is provided a battery pack including a plurality of pouch type secondary batteries, and a packaging for accommodating the secondary batteries, wherein the pouch type secondary batteries include an electrode assembly, an outer casing including an accommodation portion for accommodating the electrode assembly, and a terrace portion formed along a perimeter of the accommodation portion and having a sealing portion with a portion of a width thereof sealed, an electrode lead electrically connected to the electrode assembly and protruding outward from the outer casing, a lead film disposed between the electrode lead and the outer casing, a gas guide portion disposed between the electrode lead and the lead film and including a permeable portion provided on an outer side of the sealing portion and at least one gas channel extending from the permeable portion toward the electrode assembly via the sealing portion, and a reinforcing film disposed on the lead film to cover at least a portion of the permeable portion, and the reinforcing film includes an insertion portion in which a portion of an end extending in an inward direction from the outer casing is inserted between a case on the sealing portion and the lead film.

### ADVANTAGEOUS EFFECTS

In an aspect of the present specification, a pouch type secondary battery and a battery pack provide benefits of preventing whitening caused by continuous tension applied to a lead film upon gas discharge by introducing a reinforcing film covering a permeable portion of a gas guide portion, addressing electrolyte leakage, and also reducing the possibility of moisture intrusion from a long-term perspective.

In another aspect of the present specification, a pouch type secondary battery and a battery pack introduce a reinforcing film covering a permeable portion of a gas guide portion while inserting a portion of the reinforcing film into a sealing region so that the two are sealed together, and thus exhibit superior sealing strength even when a process of opening an interface between the gas guide portion and the lead film upon gas discharge is repeated, and accordingly prevent deformation of the film, such as a portion of the film being pushed or a specific interface being peeled off. Therefore, improved durability may be expected.

### BRIEF DESCRIPTION OF THE DRAWINGS

FIG. 1 is an exploded view of a pouch type secondary battery;
FIG. 2 is a cross-sectional view of a sealed pouch type secondary battery;
FIG. 3 is an example of an enlarged cross-sectional view of a portion of box A of FIG. 2, showing a state before an interface between a lead film and a gas guide portion is opened;
FIG. 4 is an example of an enlarged cross-sectional view of a portion of box A of FIG. 2, showing a state in which an interface between a lead film and a gas guide portion is opened;
FIG. 5 is another example of an enlarged cross-sectional view of a portion of box A of FIG. 2, showing a state before an interface between a lead film and a gas guide film is opened;
FIG. 6 is yet another example of an enlarged cross-sectional view of a portion of box A of FIG. 2, showing a state before an interface between a lead film and a gas guide film is opened;

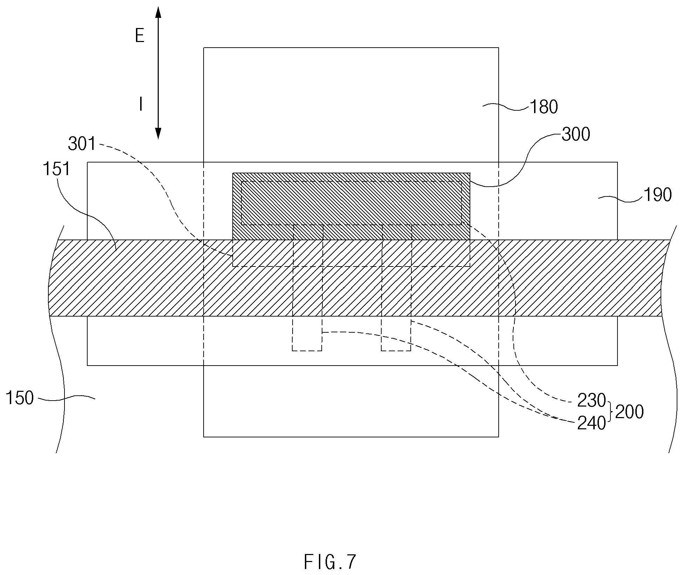

FIG. 7 is an example of a top perspective view of a portion of box A of FIG. 2 in a B direction;
FIG. 8 is a cross-sectional view of a two-layer structure reinforcing film; and
FIG. 9 is a cross-sectional view of a three-layer structure reinforcing film.

### MODE FOR CARRYING OUT THE INVENTION

Advantages and features of the present disclosure and methods of accomplishing the same may be understood more readily by reference to the following detailed description of embodiments and the accompanying drawings. However, the present disclosure may be embodied in different forms, and these embodiments are provided only to make this disclosure thorough and complete and to fully convey the scope of the present disclosure to those skilled in the art, and thus the present disclosure is defined only by the scope of the appended claims. Like reference numerals denote like elements throughout specification.

Unless otherwise defined, all terms (including technical and scientific terms) used herein have the same meaning as commonly understood by one of ordinary skill in the art to which the present invention belongs. Terms as defined in a generally used dictionary are not construed ideally or excessively unless defined apparently and specifically.

Terms used herein are not for limiting the inventive concept but for describing the embodiments. As used herein, the singular forms include the plural forms as well, unless the context clearly indicates otherwise. The meaning of "comprises" and/or "comprising" as used herein does not exclude the presence or addition of one or more other components besides a mentioned component.

As used herein, when an element "includes" a component, it may indicate that the element does not exclude another component unless explicitly described to the contrary, but may further include another component.

As used herein, the description "A and/or B" refers to A or B, or A and B.

As used herein, "%" indicates wt% unless indicated otherwise.

A pouch type secondary battery and a battery pack described herein may include at least one of the technical components, which will be described later, and may include any combination of technically feasible components among the following technical components.

In an aspect, a pouch type secondary battery includes an electrode assembly, an outer casing including an accommodation portion for accommodating the electrode assembly, and a terrace portion formed along a perimeter of the accommodation portion, an electrode lead connected to the electrode assembly and protruding outward from the outer casing via the terrace portion, a lead film disposed between the electrode lead and the outer casing, a gas guide portion disposed between the electrode lead and the lead film, and a reinforcing film disposed on the lead film.

In addition, in the pouch type secondary battery, the terrace portion is provided with a sealing portion having a portion of a width thereof sealed along a perimeter of the accommodation portion, the gas guide portion includes a permeable portion provided on an outer side of the sealing portion, and at least one gas channel provided such that the permeable portion and an inner portion of the outer casing are connected via the sealing portion, the reinforcing film covers an entire portion of the permeable portion of the gas guide portion, and includes an insertion portion in which a portion of an end extending in an inward direction of the case is inserted between the case on the sealing portion and the lead film, and the reinforcing film has a multilayer structure, and includes an adhesive layer in contact with the lead film and an insulating layer having a portion of a surface thereof exposed to the outside.

First, each component of the pouch type secondary battery is briefly described with reference to the drawings.

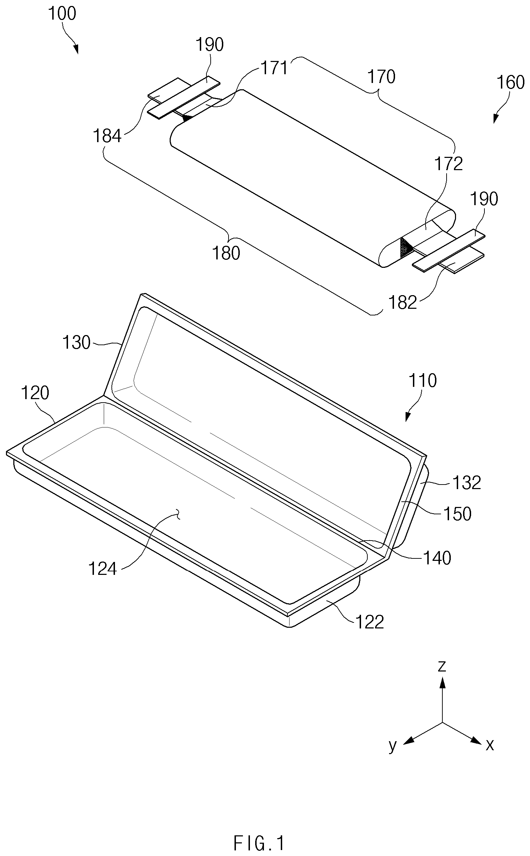

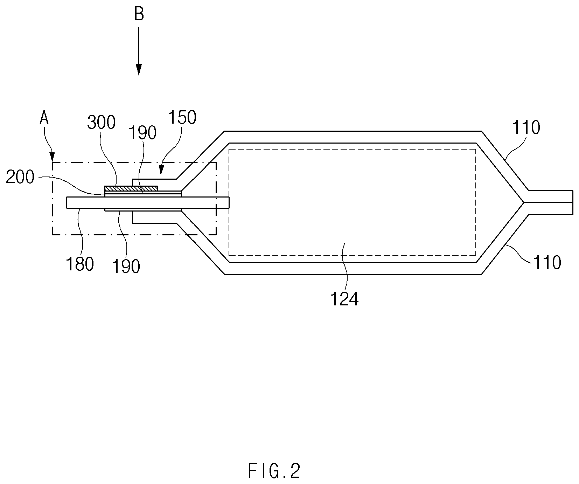

FIG. 1 is an exploded view of a pouch type secondary battery 100, and FIG. 2 is a cross-sectional view of a sealed pouch type secondary battery 100. In FIG. 2, some components of the pouch type secondary battery 100 are not provided for convenience of understanding. As shown in FIGS. 1 and 2, the pouch type secondary battery 100 includes an outer casing 110, an electrode assembly 160, an electrode lead 180, a lead film 190, a gas guide portion 200, and a reinforcing film 300.

### (1) Outer casing

In an aspect, the outer casing 110 may accommodate the electrode assembly 160 inside. The outer casing 110 may be manufactured by molding a pouch film laminate. In this case, the pouch film laminate may include a base layer, a gas barrier layer, and a sealant layer. In the pouch film laminate, the base layer, the gas barrier layer, and the sealant layer may be sequentially stacked.

The base layer is formed on an outermost layer of the pouch film laminate to protect a secondary battery against external friction and collision. The base layer is made of a polymer and may thus electrically insulate the electrode assembly from the outside.

The base layer may be made of at least one material selected from the group consisting of polyethylene, polypropylene, polycarbonate, polyethylene terephthalate, polyvinyl chloride, acrylic polymer, polyacrylonitrile, polyimide, polyamide, cellulose, aramid, nylon, polyester, polyparaphenylene benzobisoxazole, polyarylate, teflon, and glass fiber. Preferably, the base layer may be made of polyethylene terephthalate (PET), nylon, or a combination thereof, which has abrasion resistance and heat resistance.

The base layer may have a single film structure made of any one material. Alternatively, the base layer may have a composite film structure in which two or more materials are respectively formed as layers.

The base layer may have a thickness of 5 µm to 50 µm, specifically 7 µm to 40 µm, and more specifically 25 µm to 38 µm. When the thickness of the base layer satisfies the above range, external insulation is excellent, and the entire pouch is not thick, and accordingly, energy density to volume of the secondary battery may be excellent.

The gas barrier layer is stacked between the base layer and the sealant layer to secure mechanical strength of the pouch, block the entry and exit of gases or moisture outside the secondary battery, and prevent electrolyte leakage from the inside of the outer casing.

The gas barrier layer may be formed of metal, and may specifically be formed of an aluminum alloy thin film. When forming a gas barrier layer using an aluminum alloy thin film, gas barrier layer may have a predetermined level of mechanical strength and also be light in weight, and may complement electrochemical properties caused by the electrode assembly and electrolyte and obtain heat dissipation. The aluminum alloy thin film may include metal elements other than aluminum (Al), for example, may include at least one selected from the group consisting of iron (Fe), copper (Cu), chromium (Cr), manganese (Mn), nickel (Ni), magnesium (Mg), silicon (Si), and zinc (Zn).

The gas barrier layer may have a thickness of 40 µm to 100 µm, specifically 50 µm to 90 µm, and more specifically 55 µm to 85 µm. When the thickness of the gas barrier layer satisfies the above range, moldability and gas barrier performance are excellent when molding a cup portion.

The sealant layer is thermally bonded together at a sealing portion when the outer casing accommodating the electrode assembly inside is sealed to completely seal the inside of the outer casing. To this end, the sealant layer may be formed of a material having excellent heat sealing strength.

The sealant layer may be formed of a material having insulation, corrosion resistance, and sealing properties. Specifically, the sealant layer is in direct contact with the electrode assembly and/or electrolyte inside the outer casing, and may thus be formed of a material having insulation and corrosion resistance. In addition, the sealant layer is supposed to completely seal the inside of the outer casing and block material movement between inside and outside, and may thus be formed of a material having high sealing properties (e.g., excellent heat sealing strength). To make sure that such insulation, corrosion resistance, and sealing properties are obtained, the sealant layer may be formed of a polymer material.

The sealant layer may be made of at least one material selected from the group consisting of polyethylene, polypropylene, polycarbonate, polyethylene terephthalate, polyvinyl chloride, acrylic polymer, polyacrylonitrile, polyimide, polyamide, cellulose, aramid, nylon, polyester, polyparaphenylene benzobisoxazole, polyarylate, teflon, and glass fiber, and may preferably be made of a polyolefin-based resin such as polypropylene (PP) and/or polyethylene (PE). In this case, the polypropylene may be provided with cast polypropylene (CPP), acid modified polypropylene (PPa), polypropylene-ethylene copolymer, and/or polypropylene-butylene-ethylene terpolymer.

The sealant layer may have a thickness of 30 µm to 130 µm, specifically 50 µm to 120 µm, and more specifically 70 µm to 100 µm. When the thickness of the sealant layer satisfies the above range, there is an effect of both securing the sealing strength of a sealing portion and securing the formability of a pouch film laminate.

The pouch film laminate may be drawn, molded, or stretched by a punch or the like to manufacture the outer casing 110. Accordingly, the outer casing 110 may include a cup portion 122 and an accommodation portion 124. The accommodation portion 124 is a place to store the electrode assembly, and may indicate a receiving space formed in the shape of a pocket inside the cup portion 122 as the cup portion 122 is formed.

In an aspect, the outer casing 110 may include a first case 120 and a second case 130 as shown in FIG. 1. The first case 120 may include an accommodation portion 124 capable of accommodating the electrode assembly 160, and the second case 130 may cover the accommodation portion 124 from above to prevent the electrode assembly 160 from being separated to the outside of the battery case 110. The first case 120 and the second case 130 may be manufactured in a way that one side of the first case 120 and one side of the second case 130 may be connected to each other as shown in FIG. 1, but the embodiment of the present invention is not limited thereto, and the first case 120 and the second case 130 may be diversely manufactured, for example, individually manufactured by being separated from each other.

In another aspect, when forming a cup portion in the pouch film laminate, two symmetrical cup portions 122 and 132 may be drawn and molded adjacent to each other in one pouch film laminate. In this case, the cup portions 122 and 132 may be formed in the first case 120 and the second case 130, respectively, as shown in FIG. 1. After accommodating the electrode assembly 160 in the accommodation portion 124 provided in the cup portion 122 of the first case 120, a bridge portion 140 formed between the two cup portions 122 and 132 may be folded such that the two cup portions 122 and 132 face each other. In this case, the cup portion 132 of the second case 130 may accommodate the electrode assembly 160 from above. Accordingly, the two cup portions 122 and 132 accommodate one electrode assembly 160, and thus an electrode assembly 160 that is thicker than when there is only one cup portion 122 may be accommodated. In addition, one edge of the secondary battery 100 is formed by folding the outer casing 110, and accordingly, the number of edges to be sealed may be reduced when a sealing process is performed later. Accordingly, the process speed of the pouch type secondary battery 100 may be improved and the number of sealing processes may be reduced.

The outer casing 110 may be sealed while accommodating the electrode assembly 160 so that a portion of an electrode lead 180, which will be described later, i.e., a terminal portion, is exposed. Specifically, when the electrode lead 180 is connected to an electrode tab 170 of the electrode assembly 160 and a lead film 190 is formed on a portion of the electrode lead 180, the electrode assembly 160 may be accommodated in the accommodation portion 124 provided in the cup portion 122 of the first case 120, and the second case 130 may cover the accommodation portion 124 from above. Then, an electrolyte is injected into the accommodation portion 124 and a portion of a terrace portion 150 formed along a perimeter of the first case 120 and the second case 13) may be sealed to form a sealing portion (not shown).

The sealing portion may serve to seal the accommodation portion 124. Specifically, the sealing portion may seal the accommodation portion 124 by being formed on the terrace portion 150 formed along the perimeter of the accommodation portion 124.

The temperature at which the sealing portion is sealed may be 180 °C to 250 °C, specifically 200 °C to 250 °C, and more specifically 210 °C to 240 °C. When the sealing temperature satisfies the above numerical range, the outer casing 110 may obtain sufficient sealing strength through thermal bonding.

### (2) Electrode assembly

In an aspect, the electrode assembly 160 may be inserted into the outer casing 110 and sealed through the outer casing 110 after electrolyte injection.

A positive electrode, a separator, and a negative electrode may be sequentially stacked to form the electrode assembly 160. Specifically, the electrode assembly 160 may include two types of electrodes, which are a positive electrode and a negative electrode, and a separator sandwiched between the electrodes to insulate the electrodes from each other.

The positive electrode and the negative electrode may have a structure in which an active material slurry is applied to an electrode current collector in the form of a metal foil or metal mesh containing aluminum and copper, respectively. Typically, granular active materials, auxiliary conductors, binders, and conductive materials are stirred with a solvent added to form a slurry. The solvent may be removed in subsequent processing.

A slurry mixed with an electrode active material, a binder, and/or a conductive material is applied onto a positive electrode current collector and a negative electrode current collector to manufacture a positive electrode and a negative electrode, and the positive electrode and the negative electrode are stacked on both sides of the separator, and accordingly, the electrode assembly 160 may be manufactured into a predetermined shape. Types of the electrode assembly 160 may include a stack type, a jelly roll type, and a stack and folding type, but are not limited thereto.

The electrode assembly 160 may include an electrode tab 170.

The electrode tab 170 is connected to each of the positive electrode and the negative electrode of the electrode assembly 160, and protrudes outward from the electrode assembly 160, and may thus serve as a path through which electrons move between the inside and the outside of the electrode tab. An electrode current collector included in the electrode assembly 160 may be provided with a portion to which an electrode active material is applied, and an end portion to which an electrode active material is not applied, that is, a non-coating portion. The electrode tab 170 may be formed by cutting the non-coating portion or formed by connecting a separate conductive member to the non-coating portion through ultrasonic welding or the like. As shown in FIG. 1, the electrode tab 170 may protrude in different directions from the electrode assembly 160, but is not limited thereto, and may be formed to protrude in various directions, such as protruding from one side in the same direction.

### (3) Electrode lead

In an aspect, the electrode lead 180 may supply electricity to the outside of the secondary battery 100. The electrode lead 180 may be connected to the electrode tab 170 of the electrode assembly 160 through spot welding, or the like.

The electrode lead 180 may be connected to the electrode assembly 160 and may protrude to the outside of the outer casing 110 via the sealing portion 150. Specifically, one end of the electrode lead 180 may be connected to the electrode assembly 160, particularly to the electrode tab 170, and the other end of the electrode lead 180 may protrude to the outside of the outer casing 110 via the terrace portion 150.

The electrode lead 180 may include a positive electrode lead 182 with one end connected to the positive electrode tab 172 and extending in a direction in which the positive electrode tab 172 protrudes, and a negative electrode lead 184 with one end connected to the negative electrode tab 174 and extending in a direction in which the negative electrode tab 174 protrudes. The other ends of both the positive lead 182 and the negative lead 184 may protrude to the outside of the battery case 110. Accordingly, electricity generated inside the electrode assembly 160 may be supplied to the outside. In addition, the positive electrode tab 172 and the negative electrode tab 174 are each formed to protrude in various directions, and accordingly, the positive electrode lead 182 and the negative electrode lead 184 may also extend in various directions. The positive electrode lead 182 and the negative electrode lead 184 may be made of materials different from each other. That is, the positive electrode lead 182 may be made of the same aluminum (Al) material as a positive electrode current collector, and the negative electrode lead 184 may be made of the same copper (Cu) or nickel (Ni)-coated copper material as a negative electrode current collector. A portion of the electrode lead 180 protruding to the outside of the battery case 110 may serve as a terminal portion and be electrically connected to an external terminal.

One side of the electrode lead 180, which is in direct contact with the lead film 190 and/or the gas guide portion 200, may be coated with at least one selected from the group consisting of chromium (Cr), nickel (Ni), aluminum oxide (Al₂O₃), zirconium (Zr)-based anhydride salt, and titanium (Ti)-based anhydroxide salt. In this case, corrosion resistance against an electrolyte solution and adhesion to the lead film 190 and/or the gas guide portion 200 may be obtained.

### (4) Lead film

In an aspect, the lead film 190 may prevent electricity generated from the electrode assembly 160 from flowing to the battery case 110 through the electrode lead 180, and allow the sealing of the battery case 110 to be maintained. To this end, the lead film 190 may be formed of a non-conductor having nonconductive properties in which electricity does not flow well. In general, as the lead film 190, relatively thin insulation tape easily attached to the electrode lead 180 and/or the gas guide portion 200 is widely used, but the embodiment of the present invention is not limited thereto, and thus any member capable of insulating the electrode lead 180 may be used.

The lead film 190 may be disposed to surround an outer circumferential surface of the electrode lead 180 and the gas guide portion 200. Specifically, the electrode lead 180 and the gas guide portion 200 are in contact with each other on one side, and in this case, at least a portion of the electrode lead 180 and the gas guide portion 200 may be surrounded by the lead film 190. The lead film 190 may be placed to be limited within the sealing portion 150 in which the first case 120 and the second case 130 of the outer casing 110 are thermally fused, and may make the electrode lead 180 and the gas guide portion 200 adhere to the battery case 110.

The lead film 190 may be disposed between the electrode lead 180 and/or the gas guide portion 200 and the outer casing 110. For example, as shown in FIG. 2, a lower case 110, a lead film 190, an electrode lead 180, a gas guide portion 200, a lead film 190, and an upper case 110 may be stacked and disposed in this order in the terrace portion 150.

Meanwhile, the lead film 190 may include at least one layer. Specifically, the lead film 190 may include a metal adhesive layer, a core layer, and a pouch adhesive layer, which are sequentially stacked.

The metal adhesive layer is in direct contact with the electrode lead 180 and may be used to make the lead film 190 adhere to the electrode lead 180. The metal adhesive layer may include any material that easily adheres to the electrode lead 180. Specifically, the metal adhesive layer may include a modified polyolefin-based resin, for example, an acid modified polyolefin. For example, the metal adhesive layer may include at least one of acid modified polypropylene (PPa), acid modified polyethylene (PEa), or plasma-treated polypropylene (PP), but is not limited thereto. The metal adhesive layer may have a thickness of 50 µm to 80 µm, specifically 50 µm to 75 µm, and more specifically 60 µm to 75 µm. When the thickness of the metal adhesive layer satisfies the above numerical range, there is an effect of preventing penetrated pinholes and leaks at an edge portion during fusion between the electrode lead and the lead film.

The acid modified polyolefin indicates a polyolefin resin graft-modified with acid. For example, the acid modified polyolefin may be obtained by introducing a carboxyl group (graft modification) by reacting unsaturated carboxylic acid with a polyolefin resin. In this case, the unsaturated carboxylic acid may include the concept of a carboxylic acid anhydride, and the carboxyl group may include the concept of a carboxylic acid anhydride group. The unsaturated carboxylic acid subjected to reactions with a polyolefin resin may include at least one selected from the group consisting of maleic acid, fumaric acid, itaconic acid, citraconic acid, glutaconic acid, tetrahydrophthalic acid, aconitic acid, maleic anhydride, itaconic anhydride, glutaconic anhydride, citraconic anhydride, aconitic anhydride, norbornedicarboxylic anhydride, and tetrahydrophthalic anhydride, but is not limited thereto.

The core layer may be a layer placed at the center of the lead film 190. The core layer may include an unmodified polyolefin resin and for example, may include additives such as a polypropylene resin, a polyolefin elastomer (POE), and/or a colorant, but is not limited thereto. Among these, the core layer may include, for example, a polypropylene homopolymer. When the polypropylene homopolymer is included in the core layer, the melting point of the core layer may be controlled within the above numerical range and deformation caused by heat may be minimized, which serves better for securing insulation. The core layer may have a thickness of 40 µm to 70 µm, specifically 50 µm to 70 µm, and more specifically 60 µm to 70 µm. When the thickness of the core layer satisfies the above numerical range, deformation caused by heat applied upon fusion and sealing may be prevented to bring about a robust design effect in terms of securing insulation.

The pouch adhesive layer may be a layer in direct contact with the battery case 110, specifically the sealant layer of the pouch film laminate. The pouch adhesive layer may include an unmodified polyolefin resin and for example, may include additives such as a polypropylene resin and a polyolefin elastomer (POE), but is not limited thereto. Among these, the pouch adhesive layer may include a polypropylene copolymer such as a polypropylene random copolymer or a polypropylene block copolymer. The melting point of the pouch adhesive layer including the copolymer described above may be controlled within the above numerical range, and the pouch adhesive layer has a melting point similar to that of the polymer in the sealant layer of the pouch film laminate, which serves better for securing sealing processability. The pouch adhesive layer may have a thickness of 40 µm to 100 µm, specifically 40 µm to 80 µm, and more specifically 40 µm to 60 µm. When the thickness of the pouch adhesive layer satisfies the above numerical range, there is an effect of securing a polymer (e.g., polypropylene) residual rate sufficient to obtain strength for sealing between the electrode lead and the pouch film laminate.

### (5) Gas guide portion

In an aspect, the gas guide portion 200 is provided to discharge gas from the inside of the outer casing 110 to the outside, and may include a permeable portion 230 provided on an outer side of the outer casing 110 and at least one gas channel 240 extending from the permeable portion 230 toward the electrode assembly 160 via the sealing portion.

As shown in FIG. 2, the gas guide portion 200 of the present invention may be disposed between the electrode lead 180 and the lead film 190. In this case, in the region between the electrode lead 180 and the lead film 190 where the gas guide portion 200 is disposed, the electrode lead 180 and the lead film 190 may not be in direct contact, and in the region where the gas guide portion 200 is not disposed, the electrode lead 180 and the lead film 190 may be in direct contact.

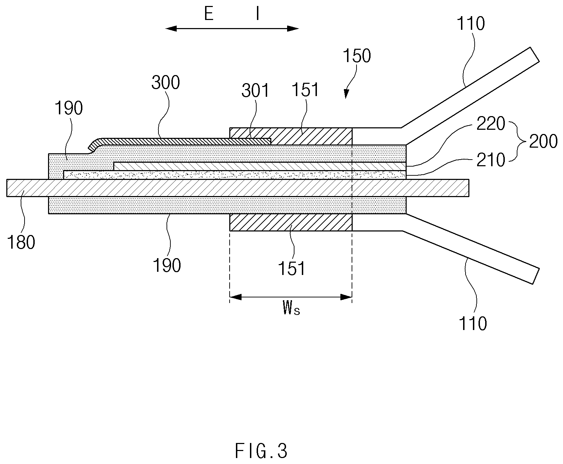

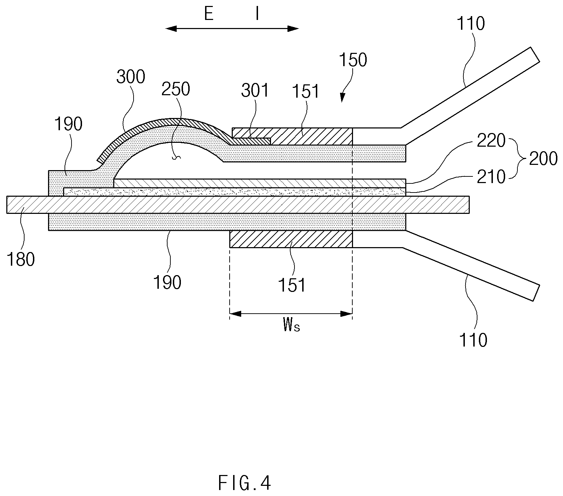

Hereinafter, the gas guide portion 200 of the present invention will be described in more detail with reference to FIGS. 3 and 4. FIG. 3 is a cross-sectional view of a pouch type secondary battery before an interface between the gas guide portion 200 and the lead film 190 is opened, and FIG. 4 is a cross-sectional view of a pouch type secondary battery after an interface between the gas guide portion 200 and the lead film 190 is opened.

As shown in FIGS. 3 and 4, an interface between the gas guide portion 200 and the lead film 190 may be normally unopened, and when pressure inside the outer casing 110 increases, the interface between the gas guide portion 200 and the lead film 190 is opened along the gas channel 240, thereby forming a gas discharge path 250. The gas inside the outer casing 110 may move to the permeable portion 230 along the gas discharge path 250 on the gas channel 240, and in this case, a gas pocket is formed on the permeable portion 230, and thus the gas may pass through the lead film 190 and be discharged to the outside of the outer casing 110. Accordingly, the pressure inside the outer casing 110 may be reduced to prevent explosion or ignition of a secondary battery.

As shown in FIGS. 3 and 4, the gas guide portion 200 includes an adhesive resin layer 210 in contact with the electrode lead 180 and a permeable resin layer 220 disposed on the adhesive resin layer 210. The adhesive resin layer 210 is in contact with the electrode lead 180, and may be used to make the gas guide portion 200 adhere to the electrode lead 180.

In an aspect, as shown in FIG. 3, the adhesive resin layer 210 of the gas guide portion 200 may be formed such that an end in an outer direction E of the outer casing is longer than the permeable resin layer 220. Accordingly, a structure may be formed in which the adhesive resin layer 210 directly contacts the lead film 190 at an end in the outer direction E of the gas guide portion 200.

Separately, an end of the lead film 190 protruding in the outer direction E of the outer casing protrudes further in the outer direction E than an end in the same direction of the adhesive resin layer 210, and may thus be disposed to directly contact the electrode lead 180.

In addition, separately, an end of the lead film 190 protruding in the outer direction E of the outer casing may be disposed to protrude further in the outer direction E than an end in the same direction of the permeable resin layer 220.

When the adhesive resin layer 210 is formed to protrude further in the outer direction E of the outer casing than the permeable resin layer 220, or when the lead film 190 is formed to protrude further in the outer direction of the outer casing than one end of the permeable resin layer 220 and/or the adhesive resin layer 210, adhesive strength between the electrode lead 180 and the gas guide portion 200, and between the electrode lead 180 and the lead film 190 may be excellent, and thus, durability degradation caused by an increase in internal pressure may be prevented, and an area of the permeable portion 230 on the permeable resin layer 220 may be easily secured, thereby allowing stable gas discharge.

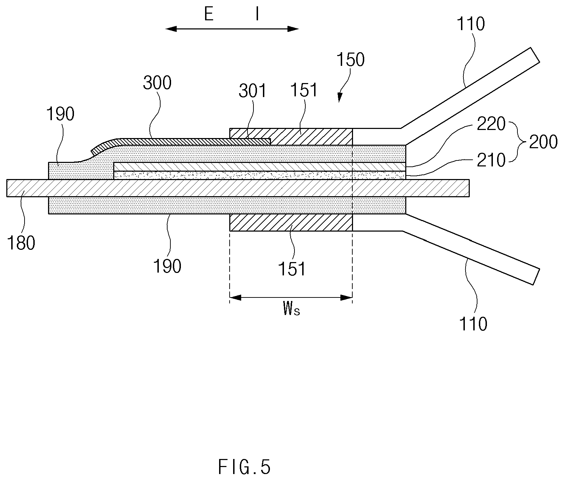

In another aspect, as in FIG. 5, the lead film 190 is formed such that one end protruding in the outer direction E of the case protrudes further than an end in the outer direction E of the cas of the gas guide portion 200, and may thus be disposed to directly contact the electrode lead 180. Separately, ends in the outer direction E of two layers on the gas guide portion 200 may be formed to coincide.

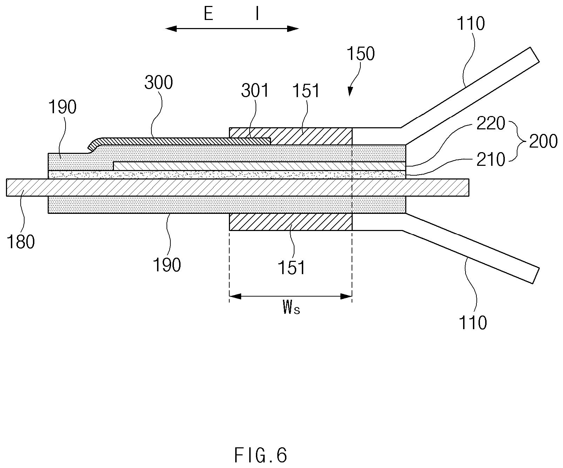

In another aspect, as in FIG. 6, the adhesive resin layer 210 may be formed such that one end protruding in the outer direction E of the case protrudes further than an end in the outer direction E of the permeable resin layer 220, but and an end in the outer direction E of the adhesive resin layer 210 coincides with an end in the outer direction E of the lead film 190. In this case, the lead film 190 may have a structure where it contacts the adhesive resin layer 210 rather than directly contacting the electrode lead 180.

A case in which the arrangement structure of the lead film 190, the electrode lead 180, and the gas guide portion 200 is formed as in FIG. 3, FIG. 5, or FIG. 6 is more favorable in terms of securing durability and an area of the permeable portion 230 than a case in which the lead film 190 is not disposed such that one end protrudes further outward from the outer casing 110 than the gas guide portion 200 but is disposed on the permeable resin layer 220 of the gas guide portion 200. Most preferably, the arrangement may be as in FIG. 3, but the structure of FIG. 5 or FIG. 6 may also be applicable depending on the case, and either structure may be optionally applied.

The adhesive resin layer 210 may include any material that easily adheres to the electrode lead 180. For example, the adhesive resin layer 210 may include a modified polyolefin resin, and may include at least one of an acid modified polyolefin or a silane-modified polyolefin. When the adhesive resin layer 210 includes a modified polyolefin resin, adhesive strength between the gas guide portion 200 and the electrode lead 180 is improved, and thus, even when a pouch type secondary battery is stored in a high-temperature environment, the gas guide portion 200 may be prevented from being detached from the electrode lead 180 and pushed out of the pouch, or an electrolyte inside the pouch may be prevented from leaking.

The acid modified polyolefin indicates a polyolefin resin graft-modified with acid. For example, the acid modified polyolefin may be obtained by introducing a carboxyl group (graft modification) by reacting unsaturated carboxylic acid with a polyolefin resin. In this case, the unsaturated carboxylic acid may include the concept of a carboxylic acid anhydride, and the carboxyl group may include the concept of a carboxylic acid anhydride group. The unsaturated carboxylic acid subjected to reactions with a polyolefin resin may include at least one selected from the group consisting of maleic acid, fumaric acid, itaconic acid, citraconic acid, glutaconic acid, tetrahydrophthalic acid, aconitic acid, maleic anhydride, itaconic anhydride, glutaconic anhydride, citraconic anhydride, aconitic anhydride, norbornedicarboxylic anhydride, and tetrahydrophthalic anhydride, but is not limited thereto. In particular, applying maleic anhydride is preferable to improve the adhesive force between the gas guide portion 200 and the electrode lead 180. The acid modified polyolefin may include at least one selected from the group consisting of acid modified polypropylene (PPa) and acid modified polyethylene (PEa), but is not limited thereto.

The silane-modified polyolefin indicates a polyolefin resin graft-modified with an unsaturated silane compound. The silane-modified polyolefin may have a structure in which an unsaturated silane compound is graft-copolymerized to a polyolefin resin, which is a main chain. The silane-modified polyolefin resin may include at least one selected from the group consisting of a silane-modified polypropylene resin and a silane-modified ethylene-vinyl acetate copolymer, but is not limited thereto.

The adhesive resin layer 210 may be modification-treated, and examples of the modification treatment include ion implantation treatment, plasma treatment, irradiation treatment, heat treatment, and the like, and treatment that changes the bonding structure of a polymer layer is preferred. These modification treatments may be performed individually, or may be performed in combination of two or more types. The modification-treated adhesive resin layer 210 may include plasma-treated polypropylene (PP), but is not limited thereto.

The adhesive resin layer 210 may have a thickness of 5 µm to 130 µm, specifically 30 µm to 120 µm, and more specifically 30 µm to 80 µm. When the thickness of the adhesive resin layer 210 satisfies the above numerical range, the adhesive resin layer 210 melts within the specified production time (tact time) and accordingly, the gas guide portion 200 and the electrode lead 180 may be easily fused.

The permeable resin layer 220 may be a layer in contact with the lead film 190. The permeable resin layer 220 may include at least one of polytetrafluoroethylene (PTFE) or polyimide (PI). The permeable resin layer 220 is preferable in tha t it does not have high adhesion to the lead film 190, and thus, even when the relevant portion is sealed, an interface with the lead film 190 may be opened when the pressure inside the case 110 increases, and accordingly, the gas discharge path 250 may be formed.

The permeable resin layer 220 may have a thickness of 40 µm to 100 µm, specifically 40 µm to 90 µm, and more specifically 45 µm to 75 µm. When the thickness of the permeable resin layer 220 satisfies the above range, the permeable resin layer 220 does not melt during the process of sealing, and when the pressure inside the case 110 increases, an interface between the permeable resin layer 220 and the lead film 190 may be opened to form the gas discharge path 250.

Meanwhile, a ratio (D1/D2) of a thickness (D1) of the adhesive resin layer to a thickness (D2) of the permeable resin layer 220 may be 0.4 to 2.0, specifically 0.4 to 1.5, and more specifically 0.4 to 1.0. When the ratio (D1/D2) satisfies the above numerical range, upon rising of the pressure inside the case 110, an interface between the permeable resin layer 220 and the lead film 190 is lifted to form a gas discharge path, and also the adhesive strength between the gas guide portion 200 and the electrode lead 180 may be improved.

The permeable resin layer 220 and the adhesive resin layer 210 may be laminated through thermocompression, and may be combined after forming an adhesive layer therebetween, or may be combined after removing a release film in the form of a tape having an adhesive applied to one side of either the permeable resin layer 220 or the adhesive resin layer 210 and a release film attached thereto. There is no particular limitation to a method of laminating the permeable resin layer 220 and the adhesive resin layer 210, and any method may be applied as long as the two layers may adhere well to each other in addition to the method described above.

### (6) Reinforcing film

In an aspect, the reinforcing film 300 is disposed on the lead film 190 to cover at least a portion of the permeable portion 230 of the gas guide portion 200, thereby preventing whitening and electrolyte seepage.

The pouch type secondary battery 100 has a series of mechanisms in which, with an increase in internal pressure, an interface between the gas guide portion 200 and the lead film 190 is opened, and only in a portion where the gas guide portion 200 is disposed, laminates including the lead film 190 and the outer casing 110 thereon are lifted upward, thereby forming the gas discharge path 250, and via this formed gas discharge path 250, the gas inside is discharged to the outside by passing through the lead film 190 of the permeable portion 230.

When this gas discharge mechanism is repeated, the lead film 190 located on a gas-permeable portion, i.e., the permeable portion 230 of the gas guide portion 200, is continuously subjected to tension, and as the internal pressure increases, the tension applied to the lead film 190 increases, causing whitening in the corresponding portion. The whitening phenomenon may take place in a portion where a molecular structure inside a film is deformed due to the continuous stretching of the lead film 190, the internal stress increases due to the deformation, and the bonding force between molecules is reduced accordingly.

Meanwhile, when the gas is discharged and the internal pressure is reduced again, i.e., when a series of charge/discharge reactions are completed and the gas inside is all discharged while being stored, the possibility of electrolyte leaking to the outside may be minimized only under conditions that the lifted lead film 190 returns to the original state thereof and the gas discharge path 250 is closed again accordingly. However, as described above, the portion where the bonding force between molecules is reduced is generated inside the lead film 190, and an electrolyte may penetrate through this portion, which may be observed as a phenomenon of electrolyte seepage in the permeable portion 230 of the gas guide portion 200 on the lead film 190, or in severe cases, leakage may be induced, and after the electrolyte seepage or leakage occurs once, the possibility of moisture penetration from the outside also increases. In addition, when the above phenomenon is repeated, the electrode lead 180 may be corroded, and a rise in internal pressure may result in venting around the portion where the bonding force of the lead film 190 is reduced.

Accordingly, in an aspect, the inventors of the present invention have attempted to overcome the limitations described above by introducing the reinforcing film 300 on the permeable portion 230 of the gas guide portion 200, which is a region where gas is permeated on the lead film 190 of the pouch type secondary battery 100, and this may result in durability obtained by suppressing degradation of the gas guide portion 200 and the lead film 190, caused by continuous gas discharge.

In an aspect, the reinforcing film 300 includes an insertion portion 301 that occupies a portion of a width of the sealing portion 151. The insertion portion 301 may indicate a region where one end of the reinforcing film 300 extends in an inner direction I of the outer casing and is inserted between the outer casing of the sealing portion 151 and the lead film. In this case, the sealing strength may be improved, and thus durability may be enhanced by maintaining the sealing strength even when an interface between the lead film 190 and the gas guide portion 200 is repeatedly opened, thereby preventing an unintended venting.

The insertion portion 301 of the reinforcing film 300 may have a length ratio of 0.05 to 0.90 with respect to a sealing width (W_{S}) of the sealing portion 151. When the insertion portion 301 is formed such that the above length ratio satisfies the corresponding range, it may be expected that the sealing strength may be secured at a level that does not compromise processability of a sealing process. That is, when the reinforcing film 300 is inserted deep into the sealing width such that the insertion portion 301 covers an entire portion of the sealing portion 151, peeling may be caused at an interface between the reinforcing films 300 having a multilayer structure. Therefore, by ensuring that an end in the inner direction I from the outer casing of the reinforcing film 300 covers only a portion of the sealing width, so that it is covered by the sealing portion 151, the interface peeling as described above may also be prevented. To further achieve this effect, preferably, the length ratio may be 0.07 or more, 0.09 or more, 0.10 or more, or 0.11 or more, and further may be 0.85 or less, 0.83 or less, 0.80 or less, 0.79 or less, or 0.78 or less.

Referring to FIGS. 3 and 4, the gas guide portion 200 is disposed on an electrode lead 180, the lead film 190 is disposed on the gas guide portion 200, and the reinforcing film 300 is disposed on the lead film 190. The reinforcing film 300 may cover at least a portion of the permeable portion 230 of the gas guide portion 200, and preferably, may cover an entire surface of the permeable portion 230. It is possible that the gas discharge rate may be relatively slower when the reinforcing film 300 covers the entire surface of the permeable portion 230 compared to when the reinforcing film 300 covers a portion of the permeable portion 230, but considering significant improvements in preventing whitening and enhancing durability may compensate for the degradation in gas discharge performance, this design may be adapted with appropriate modifications depending on the application to which secondary batteries are applied.

In the reinforcing film 300, an area with respect to an outer circumference of the reinforcing film 300 may be 100% to 500% of an area of the permeable portion 230 of the gas guide portion 200. That is, the reinforcing film 300 may be disposed to cover at least the entire area of the permeable portion 230, and may be disposed to cover up to 500% of an area (S_{A}) of the permeable portion 230. When the reinforcing film 300 is designed to cover the entire portion of the permeable portion 230, no particular issues are induced, but it may not be favorable in design aspects such as a sealing process and a thickness of a terrace portion after sealing. Therefore, it may be desirable to design such that the above range is satisfied. In addition, to effectively suppress electrolyte seepage and prevent whitening caused by stretching, it is desirable to design the area of the reinforcing film 300 to be at least 110%, at least 130%, or at least 150% of the area of the permeable portion 230.

When designing the area where the reinforcing film 300 covers the permeable portion 230, the reinforcing film portion that is greater than the area of the permeable portion 230 may also be disposed to cover a portion of the gas channel 240.

That is, since the tension applied to the lead film 190 at a portion where the permeable portion 230 and the gas channel 240 of the gas guide portion 200 meet is relatively large, to effectively prevent electrolyte seepage and whitening caused by stretching, when designing the reinforcing film 300 to be greater than the area of the permeable portion 230 of the gas guide portion 200, it may be desirable to design the reinforcing film 300 to be wide in a width direction of the electrode lead 180 and to be long in a length direction of the electrode lead 180, and preferably, the reinforcing film 300 may be disposed to cover both the permeable portion 230 and the gas channel 240.

In an aspect, the reinforcing film 300 may be applied with a tensile strength of 6.0 MPa to 9.0 MPa at 60 °C. In this case, the tensile strength is a maximum value of the force applied when a 15 mm wide and 90 mm long specimen cut from the reinforcing film was inserted into the grips at both ends for 20 mm each and then stretched at 60 °C at a rate of 1 mm/min for 20 mm. The tensile strength of the reinforcing film may vary depending on a layer structure, a material of each layer, a thickness of each layer, or the like, and it may be easy for a person with common technical knowledge in the art to prepare or obtain a reinforcing film 300 having a specific tensile strength.

The tensile strength of the reinforcing film 300 may be preferably applied to a level that prevents deformation of the lead film 190 due to tension, thereby suppressing whitening, and blocks the opening of an interface between the lead film 190 and the gas guide portion 200 upon gas discharge, thereby preventing operating pressure from increasing, and when the above range is satisfied, the effects described above are likely to be achieved, and the tensile strength of the reinforcing film 300 may preferably be 6.5 MPa or more, 6.8 MPa or more, or 7.0 MPa or more, and may also be 8.7 MPa or less, or 8.5 MPa or less.

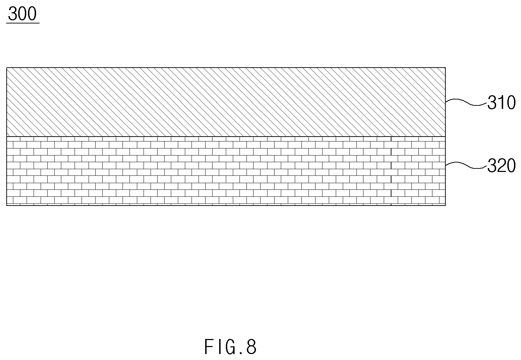

In an aspect, the reinforcing film 300 may have a multilayer structure, and with reference to FIG. 8, may have a two-layer structure, and include an adhesive layer 320 in contact with the lead film, and an insulating layer 310 whose surface is partially exposed to the outside.

The adhesive layer 320 of the reinforcing film 300 is a layer in contact with the lead film, and a polyolefin resin and preferably a modified polyolefin resin may be used as the adhesive layer 320. The modified polyolefin resin may be an acid modified polyolefin or a plasma-treated polyolefin, and may include, for example, at least one of acid modified polypropylene (PPa), acid modified polyethylene (PEa), or plasma-treated polypropylene.

The acid modified polyolefin indicates a polyolefin resin graft-modified with acid. For example, the acid modified polyolefin may be obtained by introducing a carboxyl group (graft modification) by reacting unsaturated carboxylic acid with a polyolefin resin. The unsaturated carboxylic acid subjected to reactions with a polyolefin resin may include at least one selected from the group consisting of maleic acid, fumaric acid, itaconic acid, citraconic acid, glutaconic acid, tetrahydrophthalic acid, aconitic acid, maleic anhydride, itaconic anhydride, glutaconic anhydride, citraconic anhydride, aconitic anhydride, norbornedicarboxylic anhydride, and tetrahydrophthalic anhydride, but is not limited thereto. In particular, applying maleic anhydride is preferable to improve the adhesive force between the gas discharge portion 200 and the electrode lead 180.

The adhesive layer 320 of the reinforcing film 300 may include a modified polyolefin resin, and may further include an unmodified polyolefin resin. The unmodified polyolefin resin may use a material of the same type as the material included in the insulating layer 310 described below, and may further include, for example, a polypropylene copolymer such as a polypropylene random copolymer or a polypropylene block copolymer. In addition, the unmodified polyolefin resin may be a casted polyolefin, and the casted polyolefin resin is manufactured through casting without being stretched in a specific direction during the process of manufacturing or processing, and is more flexible than stretched polyolefin resins, has no issue of tearing in a specific direction, and may be relatively easy to process. When the unmodified polyolefin resin is included in the adhesive layer 320, it may be similar to an upper layer material of the lead film 190 in contact with the reinforcing film 300, and in this case, it may be favorable in achieving a greater sealing strength during sealing, and since the materials are similar, in terms of gas permeation, it is expected that resistance at an interface may be minimized, thereby preventing degradation in gas discharge performance.

The adhesive layer 320 of the reinforcing film 300 may have a thickness of 30 µm to 65 µm, specifically 40 µm to 60 µm, and more specifically 45 µm to 55 µm. When the above thickness is satisfied, the reinforcing film 300 may be stably attached to the lead film 190, and the loss of gas discharge performance and the decrease in operating pressure may be minimized.

The reinforcing film 300 may further include an insulating layer 310 on the adhesive layer 320. The insulating layer 310 may have a surface exposed to the outside, and in some cases, when forming an insertion portion 301, a portion thereof is exposed, and the remainder may be a layer that comes into contact with the outer casing 110 as the insertion portion 301. The insulating layer 310 may also use a polyolefin resin, and preferably, may include an unmodified polyolefin resin. In the case of applying an unmodified polyolefin resin, in some cases, the insulating layer 310 partially comes into contact with the outer casing 110, and since a modified polyolefin resin is generally applied as the sealant layer, which is an innermost layer of the outer casing 110, excessive fusion may not occur during sealing, and thus, the sealing thickness may be maintained at a certain thickness or more and processability is likely ensured, which serves favorable in securing a high level of sealing strength. In this case, as the unmodified polyolefin resin, the same resin as described in the unmodified polyolefin resin that may be additionally included in addition to the modified polyolefin resin in the adhesive layer 320 may be applied.

In addition, the insulating layer 310 may further include a colorant. The colorant may include at least one selected from the group consisting of titanium dioxide, zinc oxide, iron oxide, and carbon black. The colorant may be included in an amount of about 0.1 wt% to 1.0 wt%, preferably 0.2 wt% or more or 0.3 wt% or more, and further in an amount of 0.7 wt% or less or 0.5 wt% or less, with respect to a total weight of the insulating layer 310. When the insulating layer 310 additionally includes the colorant as described above, even after the reinforcing film 300 is fused onto the lead film 190, distinguishable interlayer boundaries may make it easy to manage dimensions, and an area incorporated into the inside of the outer casing may be visually observed.

The insulating layer 310 of the reinforcing film 300 may have a thickness of 10 µm to 45 µm, preferably 13 µm to 40 µm, and more preferably 10 µm to 30 µm. When the above thickness is satisfied, the reinforcing film 300 may perform the insulating function on top of the lead film 190 and the function of the insertion portion 301 as described above may work smoothly, and the loss of gas discharge performance and the decrease in operating pressure may be minimized.

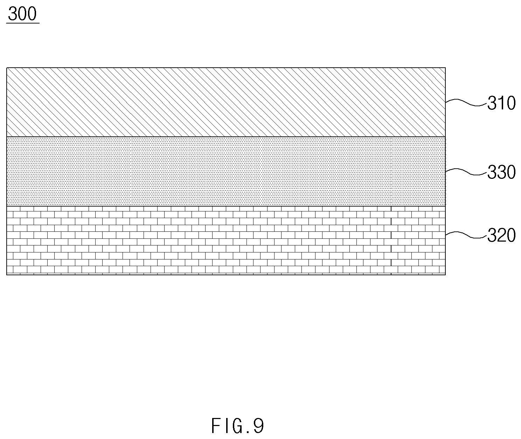

In an aspect, the reinforcing film 300 may have a multilayer structure, and with reference to FIG. 9, may have a three-layer structure, and include an adhesive layer 320 in contact with the lead film, an intermediate layer 330 disposed on the adhesive layer, and an insulating layer 310 disposed on the intermediate layer and having a portion of a surface thereof exposed to the outside.

When the reinforcing film 300 has a three-layer structure, the adhesive layer 320 and the insulating layer 310 may be applied in the same manner as in the case of a two-layer structure, and an intermediate layer 330 may be additionally included and disposed between the adhesive layer 320 and the insulating layer 310.

The intermediate layer 330 may have a greater melting point (Tm) than the insulating layer 310 and/or the adhesive layer 320. When the melting point of the intermediate layer 330 is greater than the melting points of other layers, a sealing thickness may be secured by maintaining a layer structure during sealing.

The intermediate layer 330 may include an unmodified polyolefin resin and for example, may include additives such as a polypropylene resin, a polyolefin elastomer (POE), and/or a colorant. The intermediate layer 330 may include, for example, a polypropylene homopolymer. When a polypropylene homopolymer is included in the intermediate layer, it is easy to control the melting point of the intermediate layer 330 to be greater than the melting points of the other layers, and deformation caused by heat may be minimized, which is desirable in terms of securing the sealing thickness and insulation properties. The colorant may also be further included in the intermediate layer 330, and the expected effect from the inclusion may be similar to that of the colorant included in the insulating layer 310.

The intermediate layer 330 may have a thickness of 15 µm to 50 µm, specifically 17 µm to 40 µm, and more specifically 20 µm to 40 µm. When the thickness of the intermediate layer satisfies the above numerical range, deformation caused by heat applied upon fusion and sealing may be prevented to bring about a robust design effect in terms of securing insulation.

The reinforcing film 300 may have a multilayer structure, and may have a structure in which each film is laminated in two or three layers, and an overall thickness may be preferably controlled in a rage of 60 µm to 150 µm. Preferably, the overall thickness may be 65 µm or more, 70 µm or more, 75 µm or more, 80 µm or more, 85 µm or more, 90 µm or more, 95 µm or more, and may also be 140 µm or less, 130 µm or less, or 120 µm or less. Such a thickness may be desirable in obtaining the effects of improving durability, such as preventing whitening and improving sealing strength, which are desired to be obtained through the reinforcing film while minimizing the degradation of gas discharge performance.

### (7) Electrolyte

The pouch type secondary battery 100 according to the present invention may further include an electrolyte (not shown) injected into the outer casing 110. The electrolyte is used to move lithium ions generated through electrochemical reactions of an electrode upon charging/discharging of the secondary battery 100, and may include a non-aqueous organic electrolyte solution that is a mixture of lithium salt and an organic solvent, or a polymer using a polymer electrolyte. In addition, the electrolyte may include a sulfide-based solid electrolyte, an oxide-based solid electrolyte, or a polymer-based solid electrolyte, and such solid electrolyte may have flexibility, and thus be easily deformed under external force.

### Battery pack

In an aspect, the battery pack may include a pouch type secondary battery. In this case, a secondary battery 3 may be provided in plurality. The battery pack may include a packaging that accommodates a plurality of pouch type secondary batteries inside. The packaging may be configured to protect the pouch type secondary battery from external impact or contamination. Herein, a description of the pouch type secondary battery may be provided because it has been described above.

The packaging may be provided as a box-shaped structure. The packaging may be made of metal or plastic having a predetermined rigidity. The packaging may have a structure in which a plurality of plates are combined.

The shape or structure of the packaging may be modified as needed. For example, at least a portion of the packaging may have a curved shape. In addition, the packaging may additionally be provided with other components. For example, the packaging may be provided with a busbar electrically connected to a plurality of secondary batteries and/or a venting component that connects the inside and outside of the packaging.

Hereinafter, the present invention will be described in more detail through specific embodiments. however, Examples shown below are illustrated only for the understanding of the present invention, and the scope of the inventive concept is not limited thereto. It will be apparent to those skilled in the art that various modifications and alterations are possible within the scope and technical range of the present invention, and such modifications and alterations fall within the scope of claims included herein.

### Examples and Comparative Examples

### Example 1

### (1) Manufacturing of outer casing

A polyethylene terephthalate (PET) film having a width of 266 mm, a length of 50 m, and a thickness of 12 µm and a nylon film having a width of 266 mm, a length of 50 m, and a thickness of 25 µm were stacked on one side of an aluminum alloy thin film having a width of 266 mm, a length of 50 m, and a thickness of 60 µm, and a polypropylene film having a width of 266 mm, a length of 50 m, and a thickness of 80 µm was stacked on the other side to prepare a pouch film laminate having a structure of polyethylene terephthalate/nylon/aluminum alloy thin film/polypropylene film.

In this case, the polyethylene terephthalate film and the nylon film are base layers, the aluminum alloy thin film is a gas barrier layer, and the polypropylene film is a sealant layer.

The pouch film laminate was molded to manufacture an outer casing including an accommodation portion and a sealing portion.

### (2) Manufacturing of pouch type secondary battery

A negative electrode, a positive electrode, and a porous polyethylene separator were assembled using a stacking method, and then laminated to manufacture an electrode assembly. Thereafter, an electrode lead was coupled to the electrode assembly.

LiPF₆ was dissolved in a solvent (EC:EMC:DMC = volume ratio of 3:3:4 ) to 1.0 M to prepare an electrolyte. The electrode assembly was accommodated in the outer casing with a front end of the electrode lead protruding to the outside, and the electrolyte was injected.

A 43 µm thick acid modified polypropylene film (adhesive resin layer) and a 50 µm thick polytetrafluoroethylene tape (permeable resin layer) were attached onto an upper surface of the electrode lead to form a gas guide portion.

Then, a 200 µm thick lead film was stacked on each of a lower surface of the electrode lead and an upper surface of the gas guide portion. The lead film may include a 75 µm thick metal adhesive layer containing a polypropylene random copolymer and an acid modified polypropylene, a 65 µm thick core layer containing homopolymer polypropylene, and a 60 µm thick pouch adhesive layer containing copolymer polypropylene.

Lastly, a reinforcing film was placed on the upper surface of the lead film on which the gas guide portion was formed, with about 11% of a sealing width inserted in an inward direction of a case and with an entire surface of a permeable portion covered in an outward direction.

The reinforcing film had a structure in which a film (adhesive layer) containing a 50 µm thick acid modified polypropylene and a polypropylene random copolymer, a film (intermediate layer) containing a 30 µm thick polypropylene homopolymer, and a film (insulating layer) containing a 20 µm thick polypropylene random copolymer were sequentially laminated on an upper surface of the lead film, and had a tensile strength of 7 MPa at 60 °C. In this case, the tensile strength is a maximum value of the force applied when a 15 mm wide and 90 mm long specimen cut from the reinforcing film was inserted into the grips at both ends for 20 mm each and then stretched at 60 °C at a rate of 1 mm/min for 20 mm.

Thereafter, the sealing portion of the outer casing was sealed for 2 seconds in the conditions of a seal bar area of 200 mm x 10 mm, 220 °C, and 0.20 MPa to manufacture a pouch type secondary battery.

### Example 2

A pouch type secondary battery was manufactured in the same manner as in Example 1, except that the reinforcing film was placed with about 33% of the sealing width inserted in the inward direction of a case and with the entire surface of the permeable portion covered in the outward direction.

### Example 3

A pouch type secondary battery was manufactured in the same manner as in Example 1, except that the reinforcing film was placed with about 78% of the sealing width inserted in the inward direction of a case and with the entire surface of the permeable portion covered in the outward direction.

### Example 4

A pouch type secondary battery was manufactured in the same manner as in Example 3, except that the reinforcing film was placed with about 78% of the sealing width inserted in the inward direction of a case and with the entire surface of the permeable portion covered in the outward direction, and had a tensile strength of 9 MPa at 60 °C.

### Comparative Example 1

A pouch type secondary battery was manufactured in the same manner as in Example 1, except that a reinforcing film was not formed.

### Comparative Example 2

A pouch type secondary battery was manufactured in the same manner as in Example 1, except that the reinforcing film was not inserted in the inward direction of a case so as not to overlap the sealing width and was placed to cover the entire surface of the permeable portion in the outward direction.

### Comparative Example 3

A pouch type secondary battery was manufactured in the same manner as in Example 1, except that the reinforcing film was inserted deep enough to be equivalent to the entire sealing width in the inner direction of a case and was placed to cover entire surface of the permeable portion in the outward direction.

### Experimental Example 1: Measurement of gas emission rate

Gas emission rate was measured for the pouch type secondary batteries each manufactured in Examples 1 to 4 and Comparative Examples 1 to 3.

Specifically, CO₂ was injected into the pouch type secondary batteries using pressure equipment from ITS Corporation to increase the pressure inside the pouch to 2.5 atm, and an amount of gas emitted for 24 hours was measured, and the results are shown in Table 1 below.

### Experimental Example 2: Measurement of operating pressure of gas guide portion

Internal pressure at which gas emission starts was measured for the pouch type secondary batteries each manufactured in Examples 1 to 4 and Comparative Examples 1 to 3.

Specifically, CO₂ was injected into the pouch type secondary batteries using pressure equipment from ITS Corporation, the pressure inside the pouch was increased by 0.5 atm, the batteries were left for 24 hours at each pressure, and the pressure at a point where a permeable portion of a gas guide portion was completely deformed (when an interface between a lead film of the permeable portion and the gas guide portion was all opened) was measured, and the results are shown in Table 1 below.

### Experimental Example 3: Film deformation and electrolyte seepage

For the pouch type secondary batteries each manufactured in Examples 1 to 4 and Comparative Examples 1 to 3, an electrolyte was filled with 0.1 wt% penetrant (mega check, MAGNAFLUX) and CO₂ (dry ice) was injected into the pouch type secondary batteries to increase the pressure inside the pouch to 2.0 atm. Then, at 60 °C for 5 days, the presence of deformation of the lead film at an edge of the gas induction section and the presence of electrolyte seepage were checked.

### Experimental Example 4: Measurement of sealing strength

For the pouch type secondary batteries each manufactured in Examples 1 to 4 and Comparative Examples 1 to 3, the sealing portion was cut into 15 mm intervals, and then the electrode lead was attached to a lower jig of UTM, and an outer casing was attached to an upper jig. Then, the sample was pulled at a rate of 5 mm/min at an angle of 180°at room temperature, and an average value of the 8 mm section from a point exceeding 4.5 kgf/15 mm in the measured sealing strength graph was calculated to determine a low-speed sealing strength.

**[Table 1]**

| | Gas emission rate (cc/day) | Operating pressure (atm) | Film deformation and electrolyte seepage | Sealing strength (kgf/15mm) |
|---|---|---|---|---|
| Example 1 | 6.8 | 2.0 | X | 12.85 |
| Example 2 | 6.9 | 2.0 | X | 12.12 |
| Example 3 | 7.1 | 2.0 | X | 13.22 |
| Example 4 | 7.8 | 2.5 | X | 13.41 |
| Comparative Example 1 | 14.0 | 1.0 | O | 6.91 |
| Comparative Example 2 | 6.8 | 2.0 | O | 12.74 |
| Comparative Example 3 | 6.5 | 2.0 | X | 7.33 |

According to Table 1 above, the secondary batteries of Examples 1 to 4 were found to have a considerably excellent level of sealing strength without film deformation. It was found that Comparative Example 1 had no reinforcing film attached and thus showed superior gas discharge performance but exhibited film deformation, electrolyte seepage, and low sealing strength, and accordingly is not applicable to actual products due to poor durability, Comparative Example 2, where a reinforcing film was not inserted into a sealing width, had a durability issue such as film deformation, and Comparative Example 3, where a reinforcing film was inserted into an entire sealing width, exhibited a rapid decrease in sealing strength. Therefore, it is determined that when attaching a reinforcing film to a lead film as in Examples 1 to 4 to prevent film deformation, the reinforcing film needs to be designed in dimension such that a portion of the sealing width is inserted, but not the entire film was inserted.

### [Description of Symbols]

- 100:: Pouch type secondary battery
- 110:: Outer casing
- 120:: First case
- 122:: Cup portion
- 124:: Accommodation portion
- 130:: Second case
- 132:: Cup portion
- 140:: Bridge portion
- 150:: Terrace portion
- 151:: Sealing portion
- 160:: Electrode assembly
- 170:: Electrode tab
- 172:: Positive electrode tab
- 174:: Negative electrode tab
- 180:: Electrode lead
- 182:: Positive electrode lead
- 184:: Negative electrode lead
- 190:: Lead film
- 200:: Gas guide portion
- 210:: Adhesive resin layer
- 220:: Permeable resin layer
- 230:: Permeable portion
- 240:: Gas channel
- 250:: Gas discharge path
- 300:: Reinforcing film
- 301:: Insertion portion
- 310:: Protective layer
- 320:: Adhesive layer
- 330:: Insulating layer

## Claims

1. A pouch type secondary battery comprising:
an electrode assembly;
an outer casing comprising an accommodation portion for accommodating the electrode assembly, and a terrace portion formed along a perimeter of the accommodation portion and having a sealing portion with a portion of a width thereof sealed;
an electrode lead electrically connected to the electrode assembly and protruding outward from the outer casing;
a lead film disposed between the electrode lead and the outer casing;
a gas guide portion disposed between the electrode lead and the lead film and comprising a permeable portion provided on an outer side of the sealing portion and at least one gas channel extending from the permeable portion toward the electrode assembly via the sealing portion; and
a reinforcing film disposed on the lead film to cover at least a portion of the permeable portion,
wherein the reinforcing film comprises an insertion portion occupying a portion of the width of the sealing portion, and
the insertion portion is a region in which one end of the reinforcing film extends in an inward direction from the outer casing and is inserted between the outer casing of the sealing portion and the lead film.

2. The pouch type secondary battery of claim 1, wherein the secondary battery is configured such that an interface between the lead film and the gas guide film opens along the gas channel, induced by an increase in internal pressure of the outer casing, thereby providing a gas discharge path.

3. The pouch type secondary battery of claim 1, wherein the reinforcing film is disposed on the lead film to cover an entire portion of the permeable portion.

4. The pouch type secondary battery of claim 1, wherein the reinforcing film has a tensile strength of 6.0 MPa to 9.0 MPa at 60 °C.

5. The pouch type secondary battery of claim 1, wherein the reinforcing film has a ratio of a length of the insertion portion to the width of the sealing portion of 0.05 to 0.90.

6. The pouch type secondary battery of claim 1, wherein the reinforcing film has a thickness of 60 µm to 150 µm.

7. The pouch type secondary battery of claim 1, wherein the reinforcing film comprises an adhesive layer in contact with the lead film and an insulating layer with a portion of a surface thereof exposed to the outside.

8. The pouch type secondary battery of claim 1, wherein the reinforcing film comprises an adhesive layer in contact with the lead film and an insulating layer with a portion of a surface thereof exposed to the outside, and
the adhesive layer comprises a modified polyolefin resin, and the outer layer comprises an unmodified polyolefin resin.

9. The pouch type secondary battery of claim 1, wherein the reinforcing film comprises an adhesive layer in contact with the lead film, an insulating layer with a portion of a surface thereof exposed to the outside, and an intermediate layer disposed between the adhesive layer and the insulating layer.

10. The pouch type secondary battery of claim 1, wherein the reinforcing film comprises an adhesive layer in contact with the lead film, an intermediate layer disposed on the adhesive layer, and an insulating layer disposed on the intermediate layer and having a portion of a surface thereof exposed to the outside, and
the adhesive layer has a lower melting point (Tm) than the intermediate layer.

11. The pouch type secondary battery of claim 1, wherein the reinforcing film comprises an adhesive layer in contact with the lead film, an intermediate layer disposed on the adhesive layer, and an insulating layer disposed on the intermediate layer and having at least a portion of a surface thereof exposed to the outside, and
the adhesion layer comprises a modified polyolefin resin, and the intermediate layer and the insulating layer each independently comprise an unmodified polyolefin resin.

12. The pouch type secondary battery of claim 1, wherein the gas guide portion comprises an adhesive resin layer in contact with the electrode lead and a permeable resin layer in contact with the lead film.

13. The pouch type secondary battery of claim 12, wherein in the adhesive resin layer,
one end protruding in an outward direction from the outer casing protrudes further than one end of the permeable resin layer protruding in an outward direction from the outer casing.

14. The pouch type secondary battery of claim 12, wherein in the lead film,
one end protruding in an outward direction from the outer casing protrudes further than one end of the permeable resin layer protruding in an outward direction from the outer casing.

15. A battery pack comprising:
a plurality of pouch type secondary batteries; and
a packaging for accommodating the secondary batteries,
wherein the pouch type secondary batteries comprise:
an electrode assembly;
an outer casing comprising an accommodation portion for accommodating the electrode assembly, and a terrace portion formed along a perimeter of the accommodation portion and having a sealing portion with a portion of a width thereof sealed;
an electrode lead electrically connected to the electrode assembly and protruding outward from the outer casing;
a lead film disposed between the electrode lead and the outer casing;
a gas guide portion disposed between the electrode lead and the lead film and comprising a permeable portion provided on an outer side of the sealing portion and at least one gas channel extending from the permeable portion toward the electrode assembly via the sealing portion; and
a reinforcing film disposed on the lead film to cover at least a portion of the permeable portion, and
the reinforcing film comprises an insertion portion in which a portion of an end extending in an inward direction from the outer casing is inserted between a case on the sealing portion and the lead film.
